# EUROPEAN PATENT SPECIFICATION

(11) **EP 2 543 544 B1**
(45) Date of publication and mention of the grant of the patent: **02.05.2018**
(21) Application number: 11172546.1
(22) Date of filing: 04.07.2011
(51) Int. Cl.: B60Q 1/52

(54) **Safety device for passenger transport vehicle, passenger transport vehicle comprising such a device and method for applying such a device**
Sicherheitsvorrichtung für Passagiertransportfahrzeug, Passagiertransportfahrzeug mit einer derartigen Vorrichtung und Verfahren zur Anwendung einer derartigen Vorrichtung
Dispositif de sécurité pour véhicule de transport de passagers, véhicule de transport de passagers comportant un tel dispositif et procédé d'application d'un tel dispositif

(43) Date of publication of application: 09.01.2013
(73) Proprietor: IVECO FRANCE S.A.S., 69200 Vénissieux (FR)
(72) Inventor: Codron, Stéphane, 69008 Lyon (FR)
(74) Representative: Franzolin, Luigi

(56) References cited:
- WO-A1-2010/036198
- DE-A1- 19 514 884
- DE-A1-102007 036 250
- DE-A1-102009 047 066
- US-A1- 2002 097 146
- US-A1- 2009 160 678

## Description

The invention relates to a passenger transport vehicle comprising a safety device. The invention also relates to a method for applying such a safety device.

The field of the invention is that of motor vehicle safety equipment, notably for the protection of pedestrians. In particular, the vehicles concerned are buses, coaches and public transport vehicles driven by a driver. Each passenger transport vehicle has a particular height and configuration. These vehicles commonly also have one or more blind spots. Each blind spot corresponds to a zone which the driver cannot temporarily or permanently see.

Hereinafter, consideration is given to a vehicle of the bus type in a motor vehicle system of driving on the right, as is notably the case, in Italy or in France. Nevertheless, the present description can easily be transposed to a system of driving on the left, as is notably the case, in the United Kingdom or in Japan.

In a known manner, a bus has a blind spot situated on the front right side. When the bus leaves its stop, this front right zone is particularly dangerous for the passengers who have just descended from the bus and are crossing the roadway in front of the vehicle, sometimes without demonstrating sufficient vigilance with respect to their environment, notably children. Specifically, when the bus leaves its stop, the attention of the driver is focused on the roadway on the left side, and the driver is obliged to leave the blind spot out of his zone of vision. Moreover, the children are hidden by the bus and the motor vehicle drivers who approach on the left side of the bus cannot see the children when they cross the road until it is too late. Therefore, this blind spot poses safety problems for the pedestrians and requires considerable vigilance from the driver, which is stressful and tiring.

Moreover, on certain buses, the front bumpers have been removed in order to save weight and improve the safety of people in the event of impact. Since a bus weighs more than 12 tonnes, the front portion must deform in the event of an accident in order to absorb a maximum of the impact and prevent a considerable transfer of energy. Consequently, the front portion of the bus is weakened and risks being damaged in the event of impact.

There are various surveillance devices intended for the drivers of buses and other passenger transport vehicles, such devices being provided in particular as a driving aid or else a parking aid. For example, the rear of the vehicle may be fitted with obstacle or presence detectors, or else a video camera. However, there is no known device for solving the problem of the blind spot in the front portion of the vehicle. In particular, a video system is costly and requires the connection of the camera to a surveillance screen, which obliges the driver to look away from the roadway in order to look at the screen.

DE19514884 shows a bus provided with a plurality of sensors along the perimeter thereof. One of the sensors is positioned in the front portion of the vehicle in the opposite side with respect to the driver seat.

US2002097146 discloses a bus having a sensor on the right elongated mirror. A display is disposed on the left wall of the vehicle close to the driver seat in order to signal the presence of an object when the driver is busy monitoring the roadway.

GB2466115 discloses a plurality of sensors mounted on the front and rear portion of a bus in order to detect pedestrians and to signal their presence to the driver. However, if the detection device signals the presence of any object the driver attention may reduce, and after a limited time interval the driver would ignore any signalling. US2009160678 shows a system for warning overtaking vehicles arriving from the rear part of a bus, while pedestrians are crossing the road at the front part of the bus.

The object of the present invention is to propose a safety device making it possible to monitor a blind spot in a simple, low-cost manner without the aforementioned drawbacks.

Accordingly, the subject of the invention is a vehicle for the transport of passengers, with a safety device, the vehicle comprising a front face, a system for the entry and exit of the passengers which is arranged on a first side of the vehicle, and a driving position for a driver which is arranged close to a second side of the vehicle, as characterized by the features of the claim 1.

Therefore, the invention improves the safety of pedestrians, notably children, who might cross in the blind spot without being seen by the driver. Moreover, the invention makes it possible to warn the driver in a simple and effective way in case of danger, and therefore improves his peace of mind and reduces his stress level. Finally, the invention reduces the risk of damaging the front portion of the vehicle. Combining detection and warning systems, advantageously positioned in the vehicle, gives a safety device that is not costly and is simple to apply.

According to other advantageous features of the invention, taken in isolation or in combination:
- the detection means are positioned on a portion of the front face of the vehicle which is situated close to the first side;
- the device also comprises a second warning system comprising means for transmitting a warning signal to motorists, these means being positioned on the second side on the outside of the vehicle;

- the device comprises control means configured to process at least one item of detection information originating from the detection system and to selectively transmit this item of detection information to each warning system;
- each means for transmitting a warning signal is a luminous element chosen from a bulb, a strip, a light-emitting diode or a set of light-emitting diodes;
- the detection means comprise a plurality of ultrasound sensors arranged on the front face of the vehicle close to the first side;
- the surveillance zone has a substantially frustoconical shape diverging towards the front with a depth of 50 centimetres.

A further subject of the invention is a method for applying a safety device on a vehicle as mentioned above. This method comprises at least the following steps:
a) detecting a presence and/or a movement in a surveillance zone situated on the outside of the vehicle with the aid of the detection system and recording at least one corresponding item of detection information,
b) processing the items of detection information with the aid of control means which are configured to transmit the items of detection information from the detection system to at least a first warning system, and
c) transmitting selectively a warning signal intended for the driver at least with the aid of the first warning system.

Advantageously, this method also comprises a step d) which occurs simultaneously with the step c) and which consists in selectively transmitting a second warning signal intended for the motorists with the aid of the second warning system.

The invention will be better understood on reading the following description given only as an example and made with reference to the drawings in which:
- Figure 1 is a partial section, in a horizontal plane, of a passenger transport vehicle according to the invention, comprising a safety device also according to the invention;
- Figure 2 is a view in perspective, from its front right corner, of the vehicle of Figure 1;
- Figure 3 is a schematic representation of a detection system belonging to the safety device of Figures 1 and 2;
- Figure 4 is a logic diagram showing the various steps of a method for applying the safety device according to the invention; and
- Figure 5 is a view in perspective, from its front right corner, of the vehicle of Figure 1, according to another embodiment of the invention.

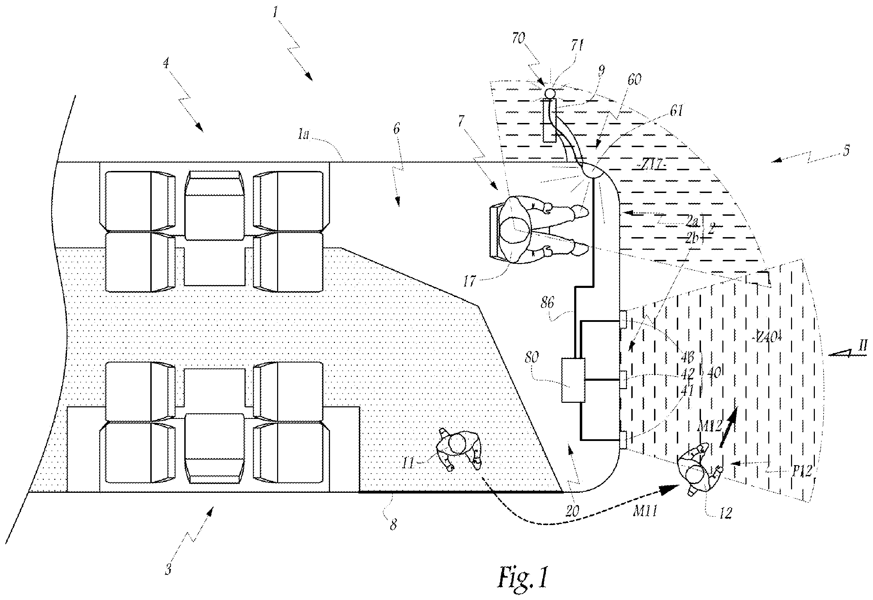

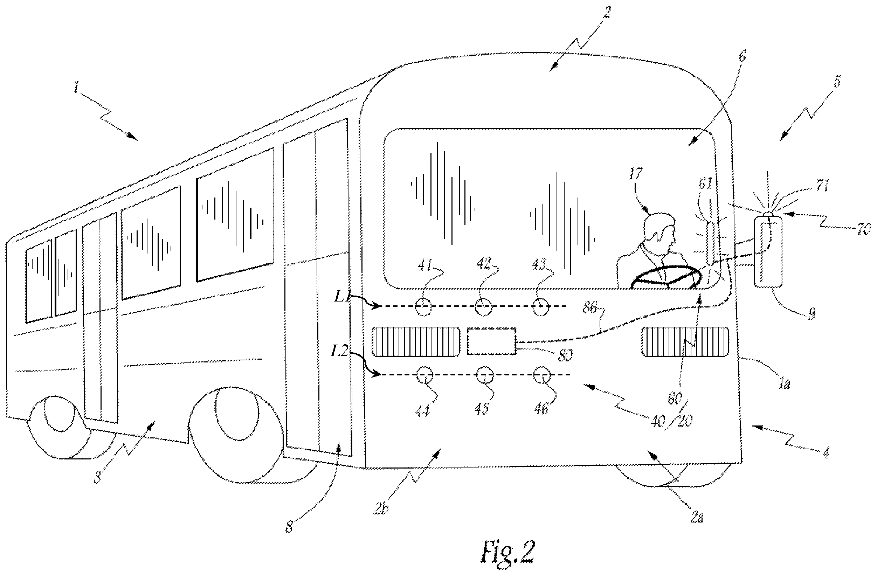

Figures 1 and 2 show a vehicle 1, of the bus type, according to the invention.

The vehicle 1 has a front face 2, a first side 3 and a second side 4, and a body 1a which delimits an external space 5 and an internal space, that is to say a passenger compartment 6. A driver 17 is installed in a driving space 7 which is situated in the passenger compartment 6 close to the second side 4. A rear view mirror 9 is attached to the body 1a on the second side 4, close to the driving space 7. A door 8 for the passengers 11 to get on and off is delimited in the body 1a on the first side 3.

In the direction of travel which corresponds to the motor vehicle driving system on the right, which is also the viewing point of the driver 17, the first side 3 corresponds to the right portion while the second side 4 corresponds to the left portion of the vehicle 1.

As a variant not shown, in a system of driving on the left, the first side 3 and the second side 4 are reversed relative to the longitudinal direction of the vehicle 1.

In the present description, the term "close" to the side 3 or to the side 4 means that one is closer to this side than to the other side.

The front face 2 has, on the one hand, a portion 2a which is situated in front of the driving space 7 close to the second side 4 and, on the other hand, a portion 2b which is complementary to the portion 2a and which is situated close to the first side 3. In practice, this front portion 2b corresponds substantially to the blind spot to be monitored. The extent of this blind spot is notably a function of the dimensions of the vehicle 1, of the position of the driving space 7 in the passenger compartment 6 and of the position of the driver 17 in the driving space 7.

The vehicle 1 also has a safety device 20 which comprises a detection system 40, a first warning system 60 and a second warning system 70. As can be seen in particular in Figure 1, an electronic control system 80 is interposed between the detection system 40 and the warning systems 60 and 70. A cable 86 connects the control system 80 to the warning systems 60 and 70 for the transmission of electronic control signals.

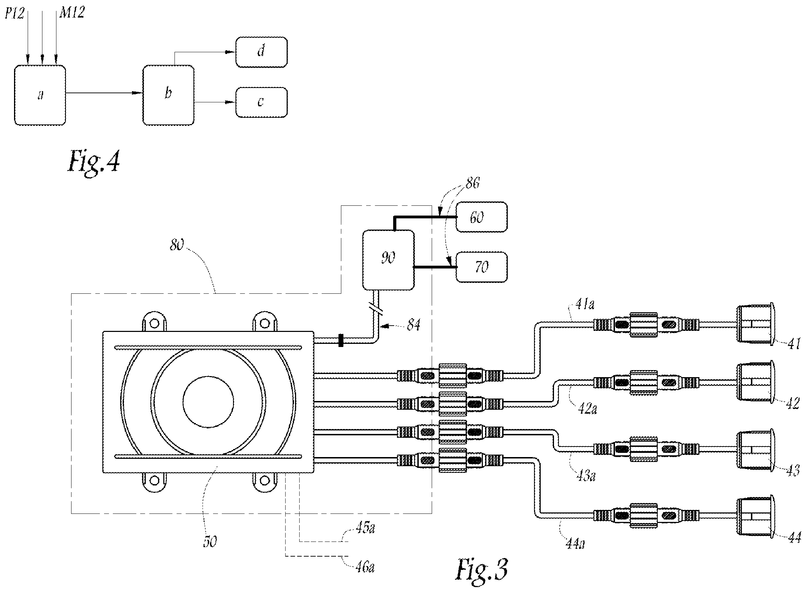

Moreover, as can be seen in Figure 3, the control system 80 consists of a control box 50 and a main control unit 90 of the vehicle 1, connected to one another via an electric cable 84. The control system 80 is incorporated into the dashboard, not shown, of the vehicle 1, with the unit 90 which is fixed and the box 50 which is removable. The unit 90 is configured to monitor all the operational systems of the vehicle 1, notably the electronic, mechanical and hydraulic systems. The unit 90 preferably comprises a software program and integration elements associated with the box 50.

As can be seen in Figures 1 to 3, the detection system 40 comprises several sensors 41, 42, 43, 44, 45 and 46, each connected to the control box 50 by a cable, respectively 41a, 42a, 43a, 44a, 45a and 46a. Consequently, the sensors 41 to 46, the cables 41a to 46a and the box 50 form a subassembly which is independent of the other elements of the device 20 and is simple to handle when the detection system 40 is installed in the vehicle 1, relative to the blind spot. For example, the sensors 41 to 46 can be installed on the portion 2b of the front face 2, turned towards the outside 5 of the vehicle 1, in two rows at heights of 75 cm and 105 cm from the ground and at 30 cm from the first side 3 of the vehicle 1, as can be seen in Figure 2.

In practice, these sensors 41 to 46 cover a surveillance zone Z40, as can be seen in Figure 1 and which extends from the front face 2 of the first side 3 to the outside 5 of the vehicle 1. This zone Z40 has a substantially frustoconical shape which is divergent towards the front. More precisely, the zone Z40 is truncated at its base which is delimited by the sensors 41 to 46 on the portion 2b of the front face 2 and extends over several metres towards the front, in a divergent manner, from the sensors 41 to 46. Therefore, the association of the sensors 41 to 46 makes it possible to detect a presence P12 or else a movement M12 of a pedestrian 12 in the surveillance zone Z40.

Preferably, the sensors 41 to 46 are ultrasound sensors. An ultrasound is a mechanical and elastic sound wave diffused by the gases, liquids, soft tissues and solids, the frequency of which is higher than 20 000 Hz. Compared with other technologies used in telemetry, ultrasound detection has a depth of field that is shallower and easily adjustable, well-suited to the present application.

The box 50 is configured to process the signals recorded by the sensors 41 to 46, and then to transmit them to the unit 90, for example in the form of a high-frequency signal. The processing of this signal notably makes it possible to modify the desired detection range. Specifically, the detection system 40 is capable of detecting an obstacle situated at a distance of from 0 to 5 metres in the zone Z40, with an accuracy of approximately 20 cm. However, a detection distance of 50 cm or 1 metre is sufficient in the context of the present application. Therefore, the processing of the detection signals by the box 50 makes it possible to distinguish detection distances of less than or greater than 1 metre and to selectively transmit these items of information to the warning systems 60 and 70 by means of the unit 90.

Also, the detection system 40 is configured to detect obstacles nearby on the roadside, for example a dustbin or a post, while ignoring those that are situated on the pavement and not on the roadway. This distinction can be carried out with the aid of the box 50, by comparing the signals received by the sensors 41 and 44, which are the closest to the first side 3, with the signals received by the sensors 42, 43, 45 and 46. Equally, the sensors 41 and 46 can be adapted to detect the width of an obstacle, and even its material. This also makes it possible to better distinguish a person from an object.

According to the present invention, not shown, sensors are horizontally arranged and the control system 80 is configured for activating the first warning system 60 just when the sensors in sequence, from the first side 3 towards the second side 4, detect the motion of an object. It means that a warning signal is activated only when an object moves in the surveillance zone Z40 from the first side 3 towards the second side 4, according to the arrow M12. The control system 80 is configured for estimating the object trajectory from the speed of the sensors activation and the relative distance measure of the object, with respect to trajectory of the bus, when the bus moves. In this way an estimation of the object trajectory is carried out taking in account the mutual movements of the bus and the object, in order to selectively signaling the presence of such object only when the object moves and/or an impact is estimated.

According to another embodiment of the present invention, the sensors 41 - 46 are aligned along two parallel horizontal lines. So as the sensors 41 - 43 are arranged along the higher line L1 and the sensors 44 - 46 are arranged along the lower line L2. The higher line L1 is disposed 5 - 10 cm under a predefined height corresponding to the average height of children, while the lower line L2 is disposed at lower height with respect to the higher line L1. In this way, the information of the higher sensors 41 - 43 are processed so as to signal the motion of the object according to the arrow M12, while the presence of a fixed object or the presence of a moving animal, like a dog or a cat, detected by the lower sensors 44 - 46, is signalled only when an impact is estimated calculating and taking into account the reciprocal trajectory of the bus and of the animal/object.

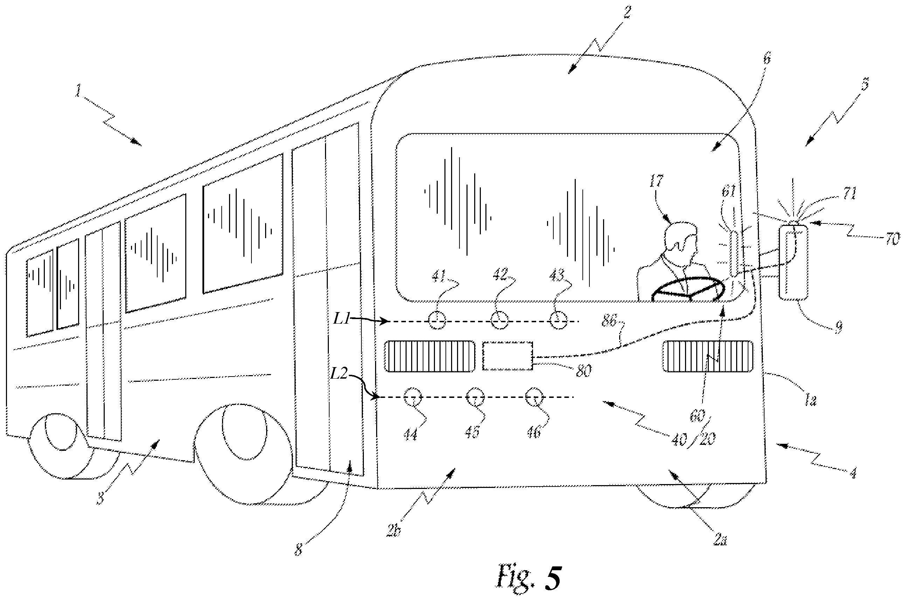

According to another preferred embodiment of the invention, the sensors disposed along the aforementioned first line L1 are offset with respect to the sensors disposed along the second line L2, see figure 5. In particular the sensor 44, belonged to the lower line L2, is the first sensor looking from the first side 3 towards the second side 4, i.e. it is closest sensor with respect to the first side 3. And the control system 80 is configured for initializing the object detection only when said first sensor 44 detects an object in its detection area and to activate the warning means only when at least one of the sensors 41 - 43 of the higher line L1 detects the object.

When just the sensor 44 detects an object it means that the object is fixed, therefore a warning signal is inhibited for avoiding distracting the driver.

Said offset disposition permits to use a half number of sensor without considerably limiting the detection accuracy. Another embodiment may be realized as a combination of the previous embodiments.

A preferred distance between two consequent sensors of the same line is ranged between 30 and 40 cm with a preferred distance of 35 cm.

Thanks to the present invention the driver is warned only if an object moves from the first side 3 to the second side 4 and, optionally, if there is a good probability of impact with the object; furthermore, if the object is probably a kid.The first warning system 60 has an electronic portion and a first element 61 designed to transmit a first warning signal to the driver 17, while the second warning system 70 has an electronic portion and a second element 71 designed to transmit a second warning signal to the motorists. The electronic portions of the systems 60 and 70 are not shown in Figure 1 and are designed, on the one hand, to receive the signals originating from the control system 80 and, on the other hand, to selectively actuate the elements 61 and 71.

In practice, the safety device 20 is mainly designed to alert the driver 17 when a pedestrian 12 crosses in front of the vehicle 1. This pedestrian 12 may be someone passing by or else a passenger 11 who has just descended from the vehicle 1, as shown by the arrow M11 in Figure 1. When the driver 17 is busy monitoring the roadway on the second side 4, in order to leave the stopping area of the vehicle 1, his field of vision can be represented by a zone Z17 in an arc of a circle in Figure 1. In particular, this zone Z17 comprises a rear view mirror 9 and excludes the blind spot on the first side 3, corresponding to the zone Z40. In this case, the driver 17 cannot directly note the presence P12 or the movement M12 of the pedestrian 12 in the blind spot.

Therefore, the safety device 20 makes it possible to detect the presence P12 and/or the movement M12 of the pedestrian 12 in the surveillance zone Z40 and then activate a signal intended for the driver 17. The driver 17 remains in control of his vehicle 1 but is warned of the danger.

The driver 17 is warned by a visual element 61 which is positioned in his field of vision Z17. The element 61 is positioned in the driving space 7, more precisely in the region situated between the driver 17 and the rear view mirror 9, inside the cabin of the driver 17. The element 61 is preferably a luminous strip which makes it possible to catch the eye of the driver 17. As an alternative, any means for transmitting a warning signal, notably visual and/or audible, can be envisaged. For example, the luminous element 61 can be chosen from the following: a bulb, a light-emitting diode (LED), or else a set of light-emitting diodes, which may form a luminous strip.

In order to enhance the protection of the passengers 11 and of the pedestrians 12, especially the children, the safety device 20 is fitted with the second warning system 70. The warning element 71 of the system 70 is placed laterally on or in the rear view mirror 9, in order to be visible to a motorist who crosses or who overtakes the vehicle 1 on the second side 4. When the movement M12 of a pedestrian 12 is detected, according one of the aforementioned detection/signaling methods, the element 71 is activated and transmits a visual signal which makes it possible to warn the motorist (s) that a pedestrian 12 is crossing the road in front of the vehicle 1. In this case, the attention of the motorist is drawn by the element 71, which allows him to anticipate the fact that someone will cross the road, to slow down and to prevent the accident. The element 71 may be similar to or different from the element 61; for example the element 71 may be a bulb of the indicator light type which is switched on continuously or intermittently. This element 71 can also be seen by the driver 17 of the vehicle 1.

As a variant not shown, an additional warning system may be positioned on the first side 3 of the vehicle 1 and configured to warn the pedestrian 12 of the danger when the latter enters the zone Z40.

According to another variant not shown, an additional warning system may be positioned behind the vehicle 1 and/or on the roof of the vehicle 1.

According to another variant not shown, the sensors 41 to 46 may be attached by bonding or welding to the front face of the vehicle, and communicate with the control system with the aid of wireless communication means.

In particular, as a preferred embodiment of the invention, said sensors are ultrasound type and are preferably six or eight in order to cover the zone Z40 that is larger and to improve the reliability of the detection system 40, notably by retrieving the information recorded by each sensor. Figure 4 shows a logic diagram of the method of applying the safety device 20.

In a step "a", the movement M12 of the pedestrian 12 is detected in the surveillance zone Z40 situated on the outside 5 of the vehicle 1 with the aid of the detection system 40 and at least one item of corresponding detection information is recorded.

In a step "b", the item or items of detection information is (are) processed with the aid of the control system 80. Also, the system 80 is configured to selectively transmit the item or items of detection information from the detection system 40 to the first warning system 60 at least, and, preferably, also to the warning system 70, according to the one of the aforementioned detection/signaling methods.

In a step "c", a warning signal is selectively transmitted to the driver 17 at least with the aid of the first warning system 60. This selective transmission means, on the one hand, that the system 60 is activated if an item of pertinent information is detected by the system 40 and then processed and transmitted by the system 80 and, on the other hand, that the system 60 is not activated if no item of information is detected by the system 40 or else that this item of information is not considered pertinent by the system 80. When the device 20 comprises a second warning system 70, in a step "d" which happens simultaneously with the step "c", a second warning signal is selectively transmitted to the motorists with the aid of the second warning system 70.

In other words, each warning system 60 and 70 is configured to receive one or more items of detection information from the detection system 40, this or these items of information having previously been processed by the control system 80, and to selectively transmit a warning signal to the driver and/or the motorists.

In practice, a vehicle which is not designed for public passenger transport makes less frequent stops and its passengers are less likely to cross the road in haste just after getting off. However, certain vehicles, for example a delivery lorry or a camping van, have a considerable blind spot and can therefore be advantageously fitted with the safety device 20, which is not very costly and is simple to install. Therefore, the safety device according to the invention is suitable for vehicles of the bus and coach type, but can also be fitted to any type of motor vehicle suitable for the transport of passengers.

## Claims

1. Vehicle (1) for the transport of passengers (11), the vehicle comprising a front face (2), a system (8) for the entry and exit of the passengers (11) which is arranged on a first side (3) of the vehicle, and a driving position (7) for a driver (17) which is arranged close to a second side (4) of the vehicle, the vehicle (1) moreover comprises a safety device (20) having:
- a detection system (40) which comprises sensors (41, 42, 43, 44, 45, 46) for detecting an object presence in a surveillance zone (Z40) situated at the front of the vehicle (1) close to the first side (3) and for estimating the relative distance between the vehicle (1) and said object , and
- a warning system (60) which comprises means (61) for transmitting a warning signal to the driver, these means (61) being adapted to be positioned in the driving position (7) and close to the second side (4) of the vehicle
whereby said sensors (41 - 46) are arranged along at least one horizontal line (L1, L2) and in that the device (20) further comprises control means (80) suitable to receive information from said sensors (41 - 46) and configured to activate said warning system (60) only when an object motion in the surveillance zone (Z40) from the first side (3) towards the second side (4) is detected;
and in that said control means (80) are configured to process information from said sensors (41 - 46) for estimating an object trajectory with respect to a vehicle (1) trajectory, when the latter moves, so as to activate said warning system (60) only when an impact is estimated.

2. Vehicle according to claim 1, **characterized in that** a first group of sensors (41 - 43) are arranged along a first higher horizontal line(L1) and a second group of sensors (44 - 46) are arranged along a second lower horizontal line (L2), the first higher line (L1) being disposed at a predefined height and the second lower line (L2) being disposed at a lower height with respect to the higher line (L1) and
**in that** information of the first group sensors (41 - 43) are processed so as to activate said warning system (60) when an object motion in the surveillance zone (Z40) from the first side (3) towards the second side (4) is detected and
**in that** information of the second group sensors (44 - 46) are processed so as to activate said warning system (60) only when an impact is estimated.

3. Vehicle according to claim 2, **characterized in that** the sensors (41 - 43) disposed along the aforementioned first line (L1) are offset with respect to the sensors of the second group disposed along the second line (L2), such that one first sensor (44) of the second group, is the closest sensor with respect to said first side (3) and
**in that** the control means (80) are configured for initializing the object detection only when said one first sensor (44) detects an object in its detection area and to activate the warning system (60) only when at least one of the higher sensors of the first group (41 - 43) detects the object.

4. Vehicle according to one of the preceding claims, **characterized in that** the sensors (41, 42, 43, 44, 45, 46) are adapted to be positioned on a portion (2b) of the front face (2) of the vehicle (1) which is situated close to the first side (3).

5. Vehicle according to one of the preceding claims, **characterized in that** it also comprises a second warning system (70) comprising means (71) for transmitting a warning signal to motorists, these means (71) are adapted to be positioned on the second side (4) on the outside (5) of the vehicle (1).

6. Vehicle according to one of the preceding claims, **characterized in that** each means (61, 71) for transmitting a warning signal is a luminous element chosen from a bulb, a strip, a light-emitting diode or a set of light-emitting diodes.

7. Vehicle according to one of the preceding claims, **characterized in that** the sensors (41, 42, 43, 44, 45, 46) are ultrasound type, and preferably four ultrasound sensors or six ultrasound sensors.

8. Vehicle according to one of the preceding claims, **characterized in that** the surveillance zone (Z40) has a substantially frustoconical shape diverging towards the front with a depth of 50 centimetres.

9. Method for applying the safety device (20) of the vehicle according to one of Claims 1 to 8, comprising at least the following steps:
a) detecting a presence (P12) and/or a movement (M12) in a surveillance zone (Z40) situated on the outside (5) of the vehicle (1) with the aid of the detection system (40) and recording at least one corresponding item of detection information,
b) processing the item or items of detection information with the aid of control means (80) which are configured to transmit the item or items of detection information from the detection system (40) to at least a first warning system (60), and
c) transmitting selectively a warning signal intended for the driver (17) at least with the aid of the first warning system (60) whereby it comprises the step of activating said warning system (60) only when an object motion in the surveillance zone (Z40) from the first side (3) towards the second side (4) is detected;
and the step of processing information from said sensors (41 - 46) for estimating an object trajectory with respect to the vehicle (1) trajectory, when the latter moves, so as to activate said warning system (60) only when an impact is estimated.

10. Method according to claim 9, **characterized in that** it also comprises a step d) which occurs simultaneously with the step c) and which consists in selectively transmitting a second warning signal intended for the motorists with the aid of the second warning system (70).

11. Computer program comprising computer program code means adapted to perform all the steps of claim 9 when said program is run on a computer.

12. A computer readable medium having a program recorded thereon, said computer readable medium comprising computer program code means adapted to perform all the steps of claim 9 when said program is run on a computer.

## Patentansprüche

1. Fahrzeug (1) zum Transport von Fahrgästen (11), umfassend eine Vorderseite (2), ein System (8) zum Einstieg und Auslass von Fahrgästen (11), welches an einer ersten Seite (3) des Fahrzeugs angeordnet ist, und einer Fahrposition (7) für einen Fahrer (17), welche in der Nähe einer zweiten Seite (3) des Fahrzeugs angeordnet ist, welches Fahrzeug (1) darüber hinaus eine Sicherheitsvorrichtung (20) umfasst, umfassend:
- ein Erfassungssystem (40), welches Sensoren (41,42,43,44,45,46) zur Detektion eines Objekts umfasst, welches in einer Überwachungszone (Z40) vorhanden ist, die an der Front des Fahrzeugs (1) nahe der ersten Seite (3) angeordnet ist, und zur Schätzung des relativen Abstands zwischen dem Fahrzeug (1) und dem Objekt, und
- ein Warnsystem (60), welches Mittel (61) zur Übertragung eines Warnsignals zum Fahrer umfasst, welche Mittel (61) dazu ausgebildet sind, in der Fahrerposition (7) und nahe der zweiten Seite (4) des Fahrzeugs angeordnet zu sein,
wobei die Sensoren (41-46) entlang zumindest einer horizontalen Linie (L1,L2) angeordnet sind, und die Vorrichtung (20) ferner Steuermittel (80) umfasst, geeignet zur Aufnahme von Informationen von den Sensoren (41-46) und dazu ausgebildet, das Warnsystem (60) ausschließlich dann zu aktivieren, wenn eine Objektbewegung in der Überwachungszone (Z40) von der ersten Seite (3) in Richtung der zweiten Seite (4) detektiert wird;
wobei die Steuermittel (80) dazu ausgebildet sind, Informationen von den Sensoren (41-46) zur Schätzung einer Objektbahn in Bezug auf eine Objektbahn des Fahrzeugs (1) zu verarbeiten, wenn das letztere bewegt, derart, dass das Warensystem (60) lediglich dann aktiviert wird, wenn ein Zusammenprall prognostiziert wird.

2. Fahrzeug gemäß Anspruch 1, **dadurch gekennzeichnet, dass** eine erste Gruppe von Sensoren (41-43) entlang einer ersten höheren horizontalen Linie (L1) angeordnet ist und eine zweite Gruppe von Sensoren (44-46) entlang einer zweiten niedrigeren horizontalen Linie (L2) angeordnet ist, wobei die erste höhere Linie (L1) auf einer vorbestimmten Höhe angeordnet ist und die zweite niedrigere Linie (L2) an einer niedrigeren Höhe als die höhere Linie (L1) angeordnet ist,
wobei die Informationen der ersten Gruppe von Sensoren (41-43) derart verarbeitet werden, dass das Warnsystem (60) aktiviert wird, wenn eine Objektbewegung in der Überwachungszone (Z40) von der ersten Seite (3) in Richtung der zweiten Seite (4) detektiert wird, und
die Informationen der zweiten Gruppe von Sensoren (44-46) derart verarbeitet werden, dass das Warnsystem (60) ausschließlich dann aktiviert wird, wenn ein Zusammenprall erwartet wird.

3. Fahrzeug gemäß Anspruch 2, **dadurch gekennzeichnet, dass** die Sensoren (41-43) entlang der genannten ersten Linie (L1) gegenüber den Sensoren der zweiten Gruppe entlang der zweiten Linie (L2) versetzt sind, so dass ein erster Sensor (44) der zweiten Gruppe der nächste Sensor zur ersten Seite (3) ist, und dass die Steuermittel (80) dazu ausgebildet sind, die Objekterfassung ausschließlich dann einzuleiten, wenn der eine erste Sensor (44) ein Objekt in seinem Erfassungsbereich detektiert, und das Warnsystem (60) ausschließlich dann zu aktivieren, wenn zumindest einer der höheren Sensoren der ersten Gruppe (41-43) das Objekt detektiert.

4. Fahrzeug gemäß einem der vorhergehenden Ansprüche, **dadurch gekennzeichnet, dass** die Sensoren (41,42,43,44,45,46) dazu ausgebildet sind, auf einem Teil (2b) der Vorderseite (2) des Fahrzeugs (1) angeordnet zu sein, der nahe der ersten Seite (3) gelegen ist.

5. Fahrzeug gemäß einem der vorhergehenden Ansprüche, **dadurch gekennzeichnet, dass** es ferner ein zweites Warnsystem (70) umfasst, umfassend Mittel (71) zur Übertragung eines Warnsignals an Kraftfahrer, welche Mittel (71) dazu ausgebildet sind, auf der zweiten Seite (4) auf der Außenseite (5) des Fahrzeugs angeordnet zu werden.

6. Fahrzeug gemäß einem der vorhergehenden Ansprüche, **dadurch gekennzeichnet, dass** jedes der Mittel (61,71) zur Übertragung eines Warnsignals ein Leuchtelement ist, ausgewählt aus einer Glühbirne, einem Streifen, einer lichtemittierenden Diode oder einem Satz von lichtemittierenden Dioden.

7. Fahrzeug gemäß einem der vorhergehenden Ansprüche, **dadurch gekennzeichnet, dass** die Sensoren (41,42,43,44,45,46) vom Ultraschalltyp sind, und dass es sich vorzugsweise um vier Ultraschallsensoren oder um sechs Ultraschallsensoren handelt.

8. Fahrzeug gemäß einem der vorhergehenden Ansprüche, **dadurch gekennzeichnet, dass** die Überwachungszone (Z40) eine im wesentlichen kegelstumpfförmige Form aufweist, welche in Richtung der Front mit einer Tiefe von 50 Zentimetern zuläuft.

9. Verfahren zur Anwendung einer Sicherheitsvorrichtung (20) des Fahrzeugs gemäß einem der Ansprüche 1 bis 8, umfassend zumindest die folgenden Schritte:
a) Ermittlung der Präsenz (P12) und/oder einer Bewegung (M12) in einer Überwachungszone (Z40), die auf der Außenseite (5) des Fahrzeugs (1) angeordnet ist, mit Hilfe des Erfassungssystems (40), und Aufzeichnung von zumindest einer Einheit einer Erfassungsinformation,
b) Verarbeitung der Einheit oder der Einheiten der Erfassungsinformation mithilfe von Steuermitteln (80), welche dazu ausgebildet sind, die Einheit oder die Einheiten der Erfassungsinformation von dem Erfassungssystem (40) zu zumindest einem ersten Warnsystem (60) zu übertragen, und
c) selektive Übertragung eines Warnsignals, das an den Fahrer (17) gerichtet ist, zumindest mit der Hilfe des ersten Warnsystems (60), wobei es einen Schritt der Aktivierung des Warnsystems (60) ausschließlich dann umfasst, wenn eine Objektbewegung in der Überwachungszone (Z40) von der ersten Seite (3) in Richtung der vierten Seite (4) detektiert wird;
und den Schritt der Verarbeitung von Information von den Sensoren (41,46) zur Schätzung einer Objektbahn relativ zu einer Bahn des Fahrzeugs (1), wenn sich das letztere bewegt, derart, dass das Warnsystem (60) ausschließlich dann aktiviert wird, wenn ein Aufprall prognostiziert wird.

10. Verfahren gemäß Anspruch 9, **dadurch gekennzeichnet, dass** dieses ferner einen Schritt (d) umfasst, der gleichzeitig mit dem Schritt (c) auftritt und welcher in der selektiven Übertragung eines zweiten Warnsignals besteht, das an Kraftfahrer gerichtet ist, mithilfe des zweiten Warnsystems (70).

11. Computerprogramm, umfassend Computerprogramm-Codemittel, dazu vorgesehen, alle Schritte aus Anspruch 9 durchzuführen, wenn das Programm auf einem Computer durchgeführt wird.

12. Computerlesbares Medium, umfassend ein darauf aufgezeichnetes Programm, welches computerlesbare Medium Computerprogramm-Codemittel umfasst, dazu vorgesehen, alle Schritte aus Anspruch 9 durchzuführen, wenn das Programm auf einem Computer durchgeführt wird.

## Revendications

1. Véhicule (1) pour le transport de passagers (11), le véhicule comprenant une face avant (2), un système (8) pour l'entrée et la sortie des passagers (11) qui est agencé sur un premier côté (3) du véhicule, et un poste de conduite (7) pour un conducteur (17) qui est agencée à proximité d'un second côté (4) du véhicule, le véhicule (1) comprend en outre un dispositif de sécurité (20) ayant :
- un système de détection (40) qui comprend des capteurs (41, 42, 43, 44, 45, 46) pour détecter une présence d'objet dans une zone de surveillance (Z40) située à l'avant du véhicule (1) à proximité du premier côté (3) et pour estimer la distance relative entre le véhicule (1) et ledit objet, et
- un système d'avertissement (60) qui comprend des moyens (61) pour transmettre un signal d'avertissement au conducteur, ces moyens (61) étant adaptés pour être positionnés dans le poste de conduite (7) et à proximité du second côté (4) du véhicule moyennant quoi lesdits capteurs (41 - 46) sont agencés le long d'au moins une ligne horizontale (L1, L2) et en ce que le dispositif (20) comprend en outre des moyens de commande (80) adaptés pour recevoir des informations desdits capteurs (41 - 46) et configurés pour activer ledit système d'avertissement (60) uniquement lorsqu'un mouvement d'objet dans la zone de surveillance (Z40) allant du premier côté (3) vers le second côté (4) est détecté ;
et en ce que lesdits moyens de commande (80) sont configurés pour traiter des informations provenant desdits capteurs (41 - 46) pour estimer une trajectoire d'objet par rapport à une trajectoire de véhicule (1), lorsque ce dernier est en mouvement, de manière à activer ledit système d'avertissement (60) uniquement lorsqu'un impact est estimé.

2. Véhicule selon la revendication 1, **caractérisé en ce qu'**un premier groupe de capteurs (41 - 43) sont agencés le long d'une première ligne horizontale plus haute (L1) et un second groupe de capteurs (44 - 46) sont agencés le long d'une seconde ligne horizontale moins haute (L2), la première ligne plus haute (L1) étant disposée à une hauteur prédéfinie et la seconde ligne moins haute (L2) étant disposée à une hauteur inférieure par rapport à la ligne plus haute (L1) et
**en ce que** les informations du premier groupe de capteurs (41 - 43) sont traitées de manière à activer ledit système d'avertissement (60) lorsqu'un mouvement d'objet dans la zone de surveillance (Z40) allant du premier côté (3) vers le second côté (4) est détecté et
**en ce que** les informations du second groupe de capteurs (44 - 46) sont traitées de manière à activer ledit système d'avertissement (60) uniquement lorsqu'un impact est estimé.

3. Véhicule selon la revendication 2, **caractérisé**
**en ce que** les capteurs (41 - 43) disposés le long de la première ligne (L1) susmentionnée sont décalés par rapport aux capteurs du second groupe disposés le long de la seconde ligne (L2), de telle sorte qu'un premier capteur (44) du second groupe, est le capteur le plus proche par rapport audit premier côté (3) et
**en ce que** les moyens de commande (80) sont configurés pour initialiser la détection d'objet uniquement lorsque ledit un premier capteur (44) détecte un objet dans sa zone de détection et pour activer le système d'avertissement (60) uniquement lorsqu'au moins un des capteurs plus hauts du premier groupe (41 - 43) détecte l'objet.

4. Véhicule selon l'une des revendications précédentes, **caractérisé en ce que** les capteurs (41, 42, 43, 44, 45, 46) sont adaptés pour être positionnés sur une portion (2b) de la face avant (2) du véhicule (1) qui est située à proximité du premier côté (3).

5. Véhicule selon l'une des revendications précédentes, **caractérisé en ce qu'**il comprend en outre un second système d'avertissement (70) comprenant des moyens (71) pour transmettre un signal d'avertissement à des automobilistes, ces moyens (71) sont adaptés pour être positionnés sur le second côté (4) à l'extérieur (5) du véhicule (1).

6. Véhicule selon l'une des revendications précédentes, **caractérisé en ce que** chaque moyen (61, 71) pour transmettre un signal d'avertissement est un élément lumineux choisi parmi une ampoule, une réglette, une diode électroluminescente ou un ensemble de diodes électroluminescentes.

7. Véhicule selon l'une des revendications précédentes, **caractérisé en ce que** les capteurs (41, 42, 43, 44, 45, 46) sont de type à ultrasons, et de préférence quatre capteurs à ultrasons ou six capteurs à ultrasons.

8. Véhicule selon l'une des revendications précédentes, **caractérisé en ce que** la zone de surveillance (Z40) a une forme sensiblement tronconique qui diverge vers l'avant avec une profondeur de 50 centimètres.

9. Procédé pour appliquer le dispositif de sécurité (20) du véhicule selon l'une des revendications 1 à 8, comprenant au moins les étapes suivantes :
a) détecter une présence (P12) et/ou un mouvement (M12) dans une zone de surveillance (Z40) située à l'extérieur (5) du véhicule (1) à l'aide du système de détection (40) et enregistrer au moins une information de détection correspondante,
b) traiter l'information ou les informations de détection à l'aide de moyens de commande (80) qui sont configurés pour transmettre l'information ou les informations de détection du système de détection (40) à au moins un premier système d'avertissement (60), et
c) transmettre sélectivement un signal d'avertissement destiné au conducteur (17) au moins à l'aide du premier système d'avertissement (60) moyennant quoi il comprend l'étape consistant à activer ledit système d'avertissement (60) uniquement lorsqu'un mouvement d'objet dans la zone de surveillance (Z40) allant du premier côté (3) vers le second côté (4) est détecté ;
et l'étape consistant à traiter les informations provenant desdits capteurs (41 - 46) pour estimer une trajectoire d'objet par rapport à la trajectoire du véhicule (1), lorsque ce dernier est en mouvement, de manière à activer ledit système d'avertissement (60) uniquement lorsqu'un impact est estimé.

10. Procédé selon la revendication 9, **caractérisé en ce qu'**il comprend en outre une étape d) qui se produit simultanément à l'étape c) et qui consiste à transmettre sélectivement un second signal d'avertissement destiné aux automobilistes à l'aide du second système d'avertissement (70).

11. Programme informatique comprenant des moyens de code de programme informatique adaptés pour réaliser toutes les étapes de la revendication 9 lorsque ledit programme est exécuté sur un ordinateur.

12. Support lisible par un ordinateur ayant un programme enregistré dessus, ledit support lisible par un ordinateur comprenant des moyens de code de programme informatique adaptés pour réaliser toutes les étapes de la revendication 9 lorsque ledit programme est exécuté sur un ordinateur.
